# EUROPÄISCHE PATENTSCHRIFT

(11) **EP 3 034 837 B1**
(45) Veröffentlichungstag und Bekanntmachung des Hinweises auf die Patenterteilung: **11.10.2017**
(21) Anmeldenummer: 14198658.8
(22) Anmeldetag: 17.12.2014
(51) Int. Cl.: F02C 7/18, F01D 5/08

(54) **Kühlluftzufuhrvorrichtung für eine Gasturbine**
Coolant air supply device for a gas turbine
Dispositif d'alimentation d'air de refroidissement pour une turbine à gaz

(43) Veröffentlichungstag der Anmeldung: 22.06.2016
(73) Patentinhaber: MTU Aero Engines AG, 80995 München (DE)
(72) Erfinder: Sasse, Stefan, 85238 Petershausen (DE)

(56) Entgegenhaltungen:
- EP-A1- 0 266 235
- WO-A1-2014/052603
- GB-A- 547 204
- US-A1- 2014 086 727

## Beschreibung

Die vorliegende Erfindung betrifft eine Kühlluftzufuhrvorrichtung für eine Gasturbine, insbesondere eine Fluggasturbine, umfassend eine Kühlluftkammer, die um eine Turbinenwelle der Gasturbine angeordnet ist, wenigstens eine Kühllufteinströmöffnung und wenigstens eine Kühlluftausströmöffnung, wobei die Kühlluftzufuhrvorrichtung eine erste und eine zweite axiale Begrenzungswandung und eine die beiden axialen Begrenzungswandungen verbindende Umfangswandung umfasst, welche zusammen die Kühlluftkammer bilden, wobei in wenigstens einer der axialen Begrenzungswandungen mehrere Kühlluftausströmöffnungen vorgesehen sind, die in Umfangsrichtung verteilt um die Turbinenwelle angeordnet und derart eingerichtet sind, dass die Kühlluft im Wesentlichen in Drehrichtung der Gasturbine aus den einzelnen Kühlluftausströmöffnungen austritt.

Bei der Zuführung von Kühlluft zur Kühlung von rotierenden Komponenten, wie etwa Turbinenschaufeln und dergleichen, wird die Kühlluft zur Verminderung von Wirkungsgradverlusten durch Strömungsturbulenzen bevorzugt mit Vordrall in Drehrichtung auf eine zu kühlende Komponente zugeführt bzw. geblasen. Derartige bekannte Kühlluftzufuhrvorrichtungen kommen beispielsweise als Teil eines Turbinenzwischengehäuses zum Einsatz, wobei die axialen Begrenzungswandungen als Gussteile oder Schmiedeteile ausgeführt sind, in denen schräg verlaufende Kühlluftbohrungen als Kühlluftausströmöffnungen vorgesehen sind.

Eine solche Ausgestaltung als gedrehte Schmiedeteile oder als Gussteile mit jeweiligen Kühlluftbohrungen ist in der Herstellung aufwändig und entsprechend kostenintensiv. Aufgrund eines zu realisierenden Verhältnisses zwischen dem Durchmesser und der Länge der Kühlluftbohrungen sind bestimmte Wandstärken erforderlich, so dass solche Guss- bzw. Schmiedeteile ein hohes Gewicht aufweisen. Insbesondere muss die Wandstärke auch so bemessen sein, dass durch die eingebrachten Kühlluftbohrungen die Gesamtstabilität der Begrenzungswand für den gewünschten Einsatzbereich in einer Gasturbine erhalten werden kann.

Aus der WO2014/052603 ist eine Vorrichtung mit mehreren geneigten Durchgängen zur Kühlung von stromabwärts angeordneten Komponenten in einer Gasturbine bekannt.

Aufgabe der Erfindung ist es, eine bekannte Kühlluftzufuhrvorrichtung so zu verbessern, dass die obigen Nachteile verringert oder vermieden werden können.

Diese Aufgabe wird durch eine Kühlluftzufuhrvorrichtung nach Anspruch 1 gelöst. Dabei ist die bzw. eine die Kühlluftausströmöffnungen aufweisende axiale Begrenzungswandung in axialer Richtung schichtartig aufgebaut, wobei die Kühlluftauströmöffnungen durch Umformen wenigstens einer ersten, kühlluftkammerseitigen Schicht und durch Umformen wenigstens einer zweiten, turbinenseitigen Schicht gebildet sind.

Durch den schichtartigen Aufbau und das Vorsehen von umgeformten Bereichen in den Schichten zur Bildung der Kühlluftausströmöffnungen wird eine einfachere Herstellung erreicht. Dabei können die gewünschten Umformungen in den Materialschichten etwa durch Biege- oder/und Stanzvorgänge einer Art plattenartigen Materialschicht erreicht werden. Denkbar ist aber auch in einem hier weiter gefassten Sinne der herkömmlichen Bedeutung von Umformung, dass eine Materialschicht bereits bei ihrer Herstellung mit solchen umgeformten Bereichen versehen wird, etwa durch Anordnen einer solchen Materialschicht an einer entsprechend geformten Matrize. Die in den Materialschichten vorgesehenen Umformungen führen auch zu einer Versteifung der Schicht, insbesondere von plattenartigen Grundkörpern, aus denen die Schichten hergestellt sein können, so dass durch die Verwendung von mehreren Schichten mit darin vorgesehenen Umformungen eine stabile und im Vergleich zu bekannten Schmiede- oder Gussteilen materialsparende und gewichtsreduzierte Begrenzungswand herstellbar ist.

Bevorzugt sind die Kühlluftausströmöffnungen dadurch gebildet, dass die erste und die zweite Schicht in Bereichen umgeformt sind, die einander in axialer Richtung gegenüberliegen. Dabei können die Umformungen insbesondere komplementär zueinander ausgeführt sein. Die Umformungen in den Schichten ergänzen sich derart, dass durch das Anordnen der Schichten aneinander, die gewünschten Kühlluftauströmöffnungen gebildet werden können. Bei zwei Schichten können die Umformungen beispielsweise auch eine Symmetrie aufweisen bzw. gleichartig ausgeführt sein, so dass jede Umformung der beiden Schichten im Wesentlichen den halben Querschnitt einer zu bildenden Kühlluftausströmöffnung bildet. Die in axialer Richtung einander gegenüberliegenden Umformungen der Schichten ermöglichen somit eine einfache und variable Gestaltung von Kühlluftauströmöffnungen unter Berücksichtigung von gewünschten Verhältnissen zwischen Durchmesser und Länge der Öffnungen.

Weiterbildend wird vorgeschlagen, dass die Umformungen derart ausgeführt sind, dass durch aneinander Anordnen der wenigstens einen ersten Schicht und der wenigstens einen zweiten Schicht Kühlluftströmungskanäle gebildet werden, welche eine Fluidverbindung zwischen der Kühlluftkammer und der äußeren Umgebung der Kühlluftzufuhrvorrichtung herstellen. Hierdurch kann insbesondere die Querschnittsgeometrie der Kühlluftströmungskanäle variabel bestimmt und angepasst werden. Dabei können gewünschte Verhältnisse zwischen dem Durchmesser und der Länge eines betreffenden Kühlluftströmungskanal berücksichtigt werden.

Es ist bevorzugt, dass die Umformungen sickenartig ausgeführt sind, wobei sie im Querschnitt eine eckige oder gekrümmte, insbesondere bogenförmige Geometrie aufweisen.

Dabei können die sickenartigen Umformungen einen Obergurt aufweisen, der bezogen auf die jeweilige erste oder/und zweite Schicht geneigt ist.

Ferner können die sickenartigen Umformungen ein freies Ende aufweisen, das von der betreffenden Schicht getrennt ist. Dabei kann eine Trennung eines freien Endes einer sickenartigen Umformung etwa durch einen Stanz- oder Schneidevorgang erreicht werden, der beim Umformvorgang durchgeführt wird.

Einander gegenüber angeordnete sickenartige Umformungen der ersten und der zweiten Schicht können einen geneigt verlaufenden Kühlluftströmungskanal begrenzen, dessen kühlkammerseitige Öffnung und dessen turbinenseitige Öffnung durch wenigstens ein freies Ende der sickenartigen Umformungen gebildet ist.

Es ist bevorzugt, dass die bzw. eine die Kühlluftausströmöffnungen aufweisende axiale Begrenzungswandung aus wenigstens zwei miteinander verbundenen Metallblechen gebildet ist, wobei jedes der Metallbleche eine Schicht bildet. Unter Bezugnahme auf die bereits oben ausgeführten möglichen Ausgestaltungen können in den Metallblechen die sickenartigen Umformungen eingebracht werden und danach können die beiden umgeformten Metallbleche so miteinander verbunden werden, dass sich in axialer Richtung gegenüber liegende Umformungen die gewünschten Kühlluftausströmöffnungen bzw. Kühlluftströmungskanäle bilden

Alternativ wird vorgeschlagen, dass die bzw. eine die Kühlluftausströmöffnungen aufweisende axiale Begrenzungswandung aus wenigstens zwei miteinander verbundenen Schichten aus keramischen Faserverbundwerkstoffen gebildet ist, in denen entsprechende Umformungen zur Bildung der Kühlluftausströmöffnungen ausgebildet sind. Dabei werden die umgeformten Bereiche bereits bei der Herstellung der Materialschichten berücksichtigt und das keramische Faserverbundmaterial auf entsprechende Formen gegeben, so dass nach Aushärten des Materials die gewünschte Materialschicht samt umgeformten Bereichen bereitgestellt werden kann.

Die Erfindung betrifft ferner eine Gasturbine, insbesondere eine Fluggasturbine, umfassend eine Verdichtungsvorrichtung, eine Brennkammer und eine Turbine, dadurch gekennzeichnet, dass im Bereich der Turbine eine Kühlluftzufuhrvorrichtung mit wenigstens einem der oben genannten Merkmale vorgesehen ist.

Hierzu wird weiter vorgeschlagen, dass die Turbine eine Hochdruckturbine und eine Niederdruckturbine aufweist, wobei die Kühlluftzufuhrvorrichtung Teil eines Turbinenzwischengehäuses der Gasturbine ist.

Dabei kann die bzw. eine die Kühlluftausströmöffnungen aufweisende axiale Begrenzungswandung der Kühlluftzufuhrvorrichtung zu der Hochdruckturbine hin oder/und zu der Niederdruckturbine hin angeordnet sein.

Nachfolgend wir die Erfindung unter Bezugnahme auf die anliegenden Figuren beispielhaft näher beschrieben ohne hierauf beschränkt zu sein.
Fig. 1 zeigt in einer stark vereinfachten schematischen Übersicht eine Gasturbine, wobei eine mögliche Anordnung einer Kühlluftzufuhrvorrichtung erklärt wird.
Fig. 2 zeigt eine schematische vereinfachte perspektivische Darstellung einer Turbinenscheibe und einer axialen Begrenzungswandung einer Kühlluftzufuhrvorrichtung.
Fig. 3 zeigt in Teilfiguren a) bis c) eine vereinfachte schematische Ausführungsform von Kühlluftausströmöffnungen bzw. Kühlluftströmungskanälen mit einer eckigen Querschnittsgeometrien mittels zweier Materialschichten.
Fig. 4 zeigt eine vereinfachte Schnittdarstellung durch einen Kühlluftströmungkanal, der aus zwei Materialschichten gebildet ist.
Fig. 5 zeigt in den Teilfiguren a) und b) eine weitere vereinfachte schematische Ausführungsform von Kühlluftausströmöffnungen bzw. Kühlluftströmungskanälen.
Fig. 6 zeigt stark vereinfacht und schematisch mögliche Querschnittsformen einer sickenartigen Ausgestaltung von Kühlluftausströmöffnungen bzw. Kühlluftströmungskanälen.

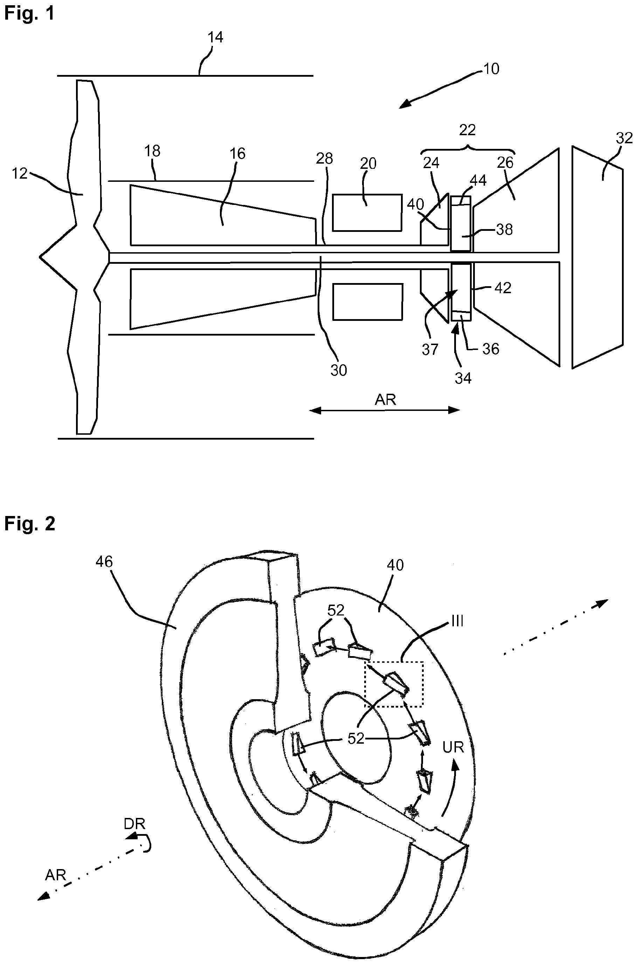

Fig. 1 zeigt stark vereinfacht und schematisch den Aufbau einer Gasturbine 10, insbesondere eines Gasturbinenflugzeugtriebwerks (Mantelstromtriebwerks). Die Gasturbine 10 umfasst einen Fan 12, der von einem angedeuteten Mantel 14 umgeben ist. In einer axialen Richtung AR schließt sich an den Fan 12 ein Verdichter 16 an, der in einem angedeuteten inneren Gehäuse 18 aufgenommen ist und einstufig oder mehrstufig ausgebildet sein kann. An den Verdichten 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 18, insbesondere einen Hochdruckverdichter, so dass diese gemeinsam angetrieben bzw. gedreht werden. Eine weitere innen liegende Welle 30 verbindet die Niederdruckturbine 26 mit dem Fan 12 und ggf. mit einem hier nicht dargestellten Niederdruckverdichter, so dass diese gemeinsam angetrieben bzw. gedreht werden. An die Turbine 22 schließt sich eine Schubdüse 32 an.

Im dargestellten Beispiel ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse von heißen Abgasen aus der Hochdruckturbine 24 durchströmt. In einem radial inneren Bereich ist eine Kühlluftzufuhrvorrichtung 37 vorgesehen mit einer Kühlluftkammer 38. Die Kühlluftkammer 38 wird in axialer Richtung AR zur Hochdruckturbine hin von einer Begrenzungswandung 40, die auch als Schottwand des Turbinenzwischengehäuses 34 bezeichnet werden kann, begrenzt. Zur Niederdruckturbine 26 hin ist die Kühlluftkammer 38 durch eine weitere axiale Begrenzungswandung 42 abgetrennt. Die beiden axialen Begrenzungswandungen 40, 42 sind durch eine Umfangswand 44 miteinander verbunden.

In Fig. 2 ist vereinfacht eine Turbinenscheibe 46 dargestellt. Eine solche Turbinenscheibe 46 kann der Hochdruckturbine 24 oder der Niederdruckturbine 26 oder auch einer hier nicht dargestellten Mitteldruckturbine zugeordnet sein. In axialer Richtung AR schließt sich an die Turbinenscheibe 46 die schematisch dargestellte Begrenzungswandung 40 der Kühlluftzufuhrvorrichtung 37 bzw. der Kühlluftkammer 38 an.

In Umfangrichtung UR sind in der Begrenzungswandung (Schottwand) 40 mehrere verteilt angeordnete Kühlluftauströmöffnungen bzw. Kühlluftdüsen 52 ersichtlich. Diese Ausströmöffnungen 52 dienen dazu, Kühlluft mit einem Vordrall in Drehrichtung DR der Turbine 22, hier beispielhaft der Hochdruckturbine 24, zuführen zu können (kleine Pfeile), um insbesondere Komponenten der Turbine 22, wie etwa Turbinenschaufeln und dergleichen durch Luft zu kühlen. Die Kühlluftausströmöffnungen 52 können auch als sogenannte Vorverwirbelungsdüsen (Preswirl-Düsen) bezeichnet werden.

Die Begrenzungswand 40 kann durch einen schichtartigen Aufbau gebildet sein, bei dem die Kühlluftauströmöffnungen 52 durch umgeformte Bereiche von Materialschichten gebildet werden, was nachfolgend erläutert wird.

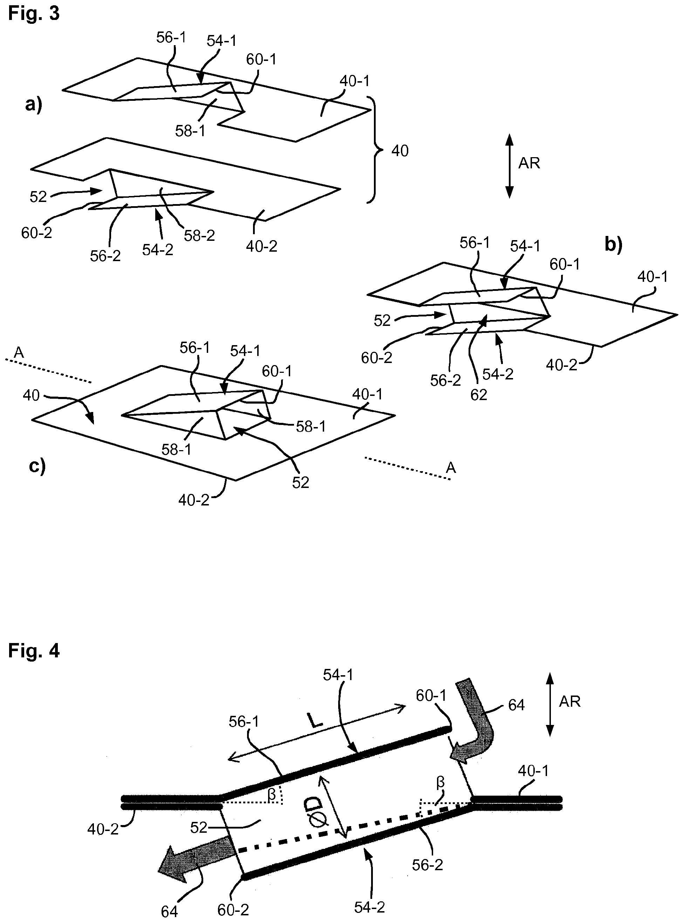

Fig. 3 zeigt eine schematische und vergrößerte Darstellung einer möglichen Ausgestaltung einer Kühlluftausströmöffnung 52, die beispielhaft einem in Fig. 2 mit einem gestrichelten Rechteck III umrandeten Bereich entsprechen kann, allerdings in etwas anders gewählter perspektivischer Darstellung. Die axiale Begrenzungswandung 40 kann im vorliegenden Beispiel durch zwei Schichten 40-1 und 40-2 gebildet sein. Diese Schichten können als Metallbleche ausgeführt sein. Im vorliegenden Beispiel ist die Schicht 40-1 der Kühlluftkammer 38 zugewandt zu verstehen und die Schicht 40-2 der Turbine 22 bzw. Hochdruckturbine 24 zugewandt. Um die Kühlluftausströmöffnungen 52 zu bilden, werden die Schichten bzw. Bleche 40-1 und 40-2 umgeformt, etwa durch Stanz- und/oder Biegevorgänge, so dass sickenartige Umformungen 54-1 und 54-2 gebildet werden können. Fig. 3a) zeigt die beiden Schichten 40-1 und 40-2 voneinander getrennt und in Längsrichtung der Umformungen 54-1 und 54-2 geschnitten, etwa entsprechend der Schnittlinie A-A der Fig. 3c). Die in Fig. 3c) gezeigte sickenartige Umformung 54-1 weist einen sogenannten Obergurt 56-1 auf, der mittels jeweiliger Seiten 58-1 mit der Schicht bzw. dem Blech 40-1 verbunden ist. Der Obergurt 56-1 verläuft geneigt zu der Schicht 40-1, so dass die sickenartige Umformung 54-1 im vorliegenden Beispiel als eine Art Keil ausgestaltet ist. Bei 60-1 weist die Umformung 54-1 ein freies Ende auf, das von der Schicht 40-1 getrennt worden ist. Das für die Schicht bzw. das Blech 40-1 Gesagte gilt in analoger Weise auch für die zweite Schicht bzw. das Blech 40-2, die ebenfalls einen Obergurt 56-2, Seiten 58-2 und ein freies Ende 60-2 aufweist. Die beiden Umformungen 54-1 und 54-2 sind so ausgeführt, dass sie sich beim Zusammenfügen der beiden Schichten bzw. Belche 40-1 und 40-2 komplementär ergänzen (Fig. 3b), um eine Kühlluftausströmöffnung 52 in der Begrenzungswandung 40 zu bilden. Durch die Umformungen 54-1 und 54-2 wird auch ein Kühlluftströmungskanal 62 begrenzt, der die Begrenzungswandung 40 geneigt bzw. schräg durchquert.

Fig. 4 zeigt in einer Schnittdarstellung eine Kühlluftausströmöffnung 52 mit dem Kühlluftströmungskanal 62. Die Schicht bzw. das Blech 40-1 ist der Kühlluftkammer zugewandt. Die in der Kühlluftkammer unter Druck stehende Kühlluft entweicht durch die Kühlluftausströmöffnung 52 wie durch die schwarzen Pfeile 64 angedeutet zur Turbine hin, um die gewünschten Komponenten mit Kühlluft zu umströmen und zu kühlen. In der Darstellung der Fig. 4 sind nochmals die Obergurte 56-1 und 56-2 sowie die freien Enden 60-1 und 60-2 der beiden sickenartigen Umformungen 54-1 und 54-2 ersichtlich. Ferner ist aus der Darstellung auch ersichtlich, dass durch die Wahl der Länge des Obergurts 56-1 bzw. 56-2 sowie des Ausmaßes der Umformung der Schichten 40-1 und 40-2 ein gewünschtes Verhältnis zwischen der Länge und dem Durchmesser des Kühlluftströmungskanals 62 erreicht werden kann. Wählt man beispielsweise einen kleineren Neigungswinkel β der Obergurte 56-1 und 56-2, wird der Durchmesser des Kühlluftströmungskanals 62 verringert. Bezüglich des Neigungswinkels der Obergurte 56-1 bzw. 56-2 ist anzumerken, dass diese gleich oder unterschiedlich sein können. Wird im vorliegenden Beispiel der Fig. 4 etwa der Neigungswinkel β des turbinenseitigen Obergurts 56-2 verringert, kann ein von der Kühlluftkammer in Strömungsrichtung sich verjüngender Strömungsquerschnitt des Kanals 62 erreicht werden, was durch die breite strichpunktierte Linie angedeutet ist.

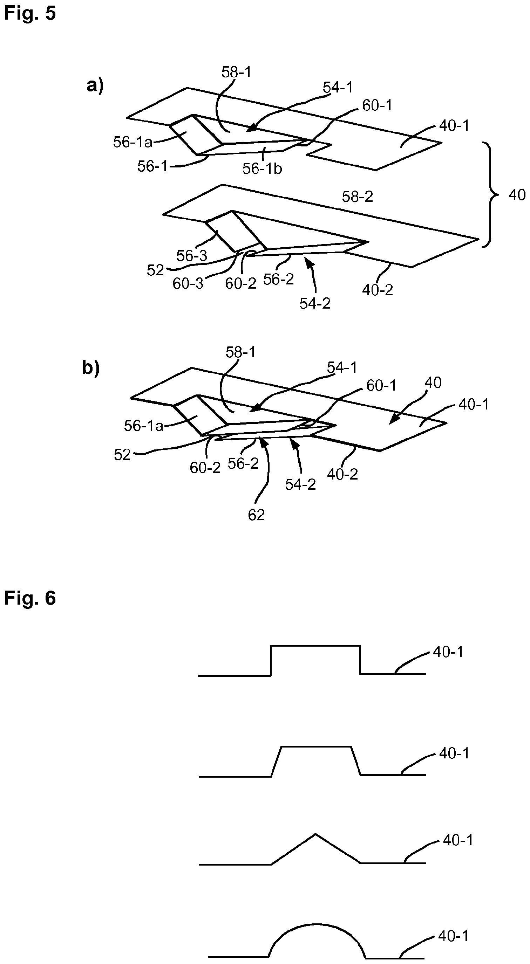

Fig. 5 zeigt eine weitere Ausführungsform der umgeformten Bereiche 54-1 und 54-2. Während in der Fig. 3 die Umformungen 54-1 und 54-2 gleichartig und symmetrisch ausgeführt sind, sind die Umformungen 54-1 und 54-2 der Fig. 5 unterschiedlich ausgeführt, so dass ein anderer Verlauf und Querschnitt des Kühlluftströmungskanals 62 erreicht werden kann. Der Obergurt 56-1 der sickenartigen Umformung 54-1 ist in diesem Beispiel durch zwei zueinander geneigte Flächen 56-1a und 56-1b gebildet. Der Obergurt 56-1 weist an der Fläche 56-1b sein freies Ende 60-1 auf. Im Gegensatz zum Beispiel der Fig. 3 verläuft der Obergurt 56-1 bezogen auf die Schicht bzw. das Blech 40-1 derart, dass er in Richtung der Kühlluftkammer nicht über die Schicht bzw. das Blech 40-1 vorsteht. Die sickenartige Umformung 54-2 weist zwei Obergurte 56-2 und 56-3 auf, die zueinander geneigt ausgebildet sind, wobei sich ihre jeweiligen freien Enden 60-2 und 60-3 gegenüberliegen und einen freien Raum zwischen sich lassen. Werden die beiden Schichten bzw. Bleche 40-1 und 40-2 der Fig. 5a) aufeinander gelegt und miteinander verbunden, wie dies in Fig. 5b) dargestellt ist, wird ein schmaler Kühllufströmungskanal 62 gebildet, der durch die Obergurte 56-1 und 56-2 sowie entsprechende Seitenwände, von denen nur diejenige mit dem Bezugszeichen 58-1 sichtbar ist, begrenzt. Kühlluft aus der Kühlluftkammer strömt bei 52 aus.

In den beiden Beispielen der Figuren 3 und 5 sind der Einfachheit halber nur Querschnittsgeometrien der sickenartigen Umformungen 54-1 und 54-2 dargestellt, die einen eckigen, insbesondere rechteckigen Strömungsquerschnitt bilden. Die Ausgestaltung und die Geometrien der sickenartigen Umformungen können aber auch andere Formen aufweisen, wie dies in der Fig. 6 beispielhaft dargestellt ist. Eine sickenartige Umformung in einer der Schichten 40-1 bzw. 40-2 kann auch trapezförmig oder dreieckig oder bogenförmig ausgeführt sein. Die Ausgestaltung der sickenartigen Umformungen kann also je nach Bedarf gewählt und angepasst werden. Ferner ist es auch denkbar, dass die Umformungen in zwei miteinander verbundenen Schichten bzw. Blechen unterschiedlich sein können.

Allgemein kann gesagt werden, dass bei der Herstellung einer Begrenzungswandung der Kühlluftkammer die umgeformten Bereiche der Schichten an jeweils korrespondierenden Positionen vorgesehen werden können und dass die Ausgestaltung so gewählt werden kann, dass beim aneinander Anordnen der Schichten die entsprechenden Kühlluftausströmöffnungen bzw. Kühlluftströmungskanäle gebildet werden.

Die miteinander zu verbindenden Schichten bzw. Bleche 40-1 und 40-2 können miteinander verklebt, verlötet oder verschweißt werden.

Auch wenn in den beschriebenen Beispielen die Schichten 40-1 und 40-2 als Metallbleche beschrieben worden sind, können diese Schichten auch durch andere Materialien gebildet sein und die entsprechende Formgebung aufweisen, um Kühlluftausströmöffnungen zu bilden. Es wird insbesondere daran gedacht, die Schichten 40-1 und 40-2 aus keramischem Faserverbundmaterial herzustellen. Dabei kann eine hier als erste bzw. zweite Schicht bezeichnete Schicht selbst aus mehreren Lagen bzw. Schichten von solchem keramischen Faserverbundmaterial gebildet sein.

Der hier vorgestellte schichtartige Aufbau von axialen Begrenzungswandungen der Kühlluftkammer ermöglicht eine materialsparende und kostengünstige Alternative zu Guss- oder Schmiedeteilen, in denen Bohrungen als Kühlluftausströmöffnungen vorgesehen sind. Ferner können die Geometrie der Kühlluftausströmöffnungen bzw. der Kühlluftströmungskanäle freier gestaltet werden verglichen mit Bohrungen. Insbesondere ist es auch denkbar, an freien Enden der Obergurte der sickenartigen Umformungen weitere kleinräumige Umformungen vorzunehmen, um beispielsweise Verwirbelungen an den freien Enden entgegenzuwirken.

## Patentansprüche

1. Kühlluftzufuhrvorrichtung für eine Gasturbine (10), insbesondere eine Fluggasturbine, umfassend:
eine Kühlluftkammer (38), die um eine Turbinenwelle (28, 30) der Gasturbine (10) angeordnet werden kann,
wenigstens eine Kühllufteinströmöffnung und mehrere Kühlluftausströmöffnungen (52),
wobei die Kühlluftzufuhrvorrichtung eine erste und eine zweite axiale Begrenzungswandung (40, 42) und eine die beiden axialen Begrenzungswandungen verbindende Umfangswandung (44) umfasst, welche zusammen die Kühlluftkammer (38) bilden,
wobei in wenigstens einer der axialen Begrenzungswandungen (40, 42) mehrere Kühlluftausströmöffnungen (52) vorgesehen sind, die, wenn die Kühlluftkammer (38) in der Gasturbine (10) angeordnet ist, in Umfangsrichtung verteilt um die Turbinenwelle (28, 30) angeordnet und derart eingerichtet sind, dass die Kühlluft im Betrieb mit der Gasturbine im Wesentlichen in Drehrichtung der Gasturbine aus den einzelnen Kühlluftausströmöffnungen (52) austritt,
**dadurch gekennzeichnet, dass** die bzw. eine die Kühlluftausströmöffnungen (52) aufweisende axiale Begrenzungswandung (40, 42) in axialer Richtung (AR) schichtartig aufgebaut ist, wobei die Kühlluftauströmöffnungen (52) durch Umformen wenigstens einer ersten, kühlluftkammerseitigen Schicht (40-1) und durch Umformen wenigstens einer zweiten Schicht (40-2), welche im Betrieb mit der Gasturbine turbinenseitig ist, gebildet sind.

2. Kühlluftzufuhrvorrichtung nach Anspruch 1, **dadurch gekennzeichnet, dass** die Kühlluftausströmöffnungen (52) dadurch gebildet sind, dass die erste und die zweite Schicht (40-1, 40-2) in Bereichen umgeformt sind, die einander in axialer Richtung (AR) gegenüberliegen, wobei die Umformungen (54-1, 54-2) insbesondere komplementär ausgebildet sind.

3. Kühlluftzufuhrvorrichtung nach Anspruch 2, **dadurch gekennzeichnet, dass** die Umformungen (54-1, 54-2) derart ausgeführt sind, dass durch aneinander Anordnen der wenigstens einen ersten Schicht (40-1) und der wenigstens einen zweiten Schicht (40-2) Kühlluftströmungskanäle (62) gebildet werden, welche eine Fluidverbindung zwischen der Kühlluftkammer (38) und der äußeren Umgebung der Kühlluftzufuhrvorrichtung herstellen.

4. Kühlluftzufuhrvorrichtung nach einem der Ansprüche 1 bis 3, **dadurch gekennzeichnet, dass** die Umformungen (54-1, 54-2) sickenartig ausgeführt sind, wobei sie im Querschnitt eine eckige oder gekrümmte, insbesondere bogenförmige Geometrie aufweisen.

5. Kühlluftzufuhrvorrichtung nach Anspruch 4, **dadurch gekennzeichnet, dass** die sickenartigen Umformungen (54-1, 54-2) einen Obergurt (56-1, 56-2, 56-3) aufweisen, der bezogen auf die jeweilige erste oder/und zweite Schicht (40-1, 40-2) geneigt ist.

6. Kühlluftzufuhrvorrichtung nach Anspruch 4 oder 5, **dadurch gekennzeichnet, dass** die sickenartigen Umformungen (54-1, 54-2) ein freies Ende (60-1, 60-2, 60-3) aufweisen, das von der betreffenden Schicht (40-1, 40-2) getrennt ist.

7. Kühlluftzufuhrvorrichtung nach Anspruch 5 und 6, **dadurch gekennzeichnet, dass** einander gegenüber angeordnete sickenartige Umformungen (54-1, 54-2) der ersten und der zweiten Schicht (40-1, 40-2) einen geneigt verlaufenden Kühlluftströmungskanal (62) begrenzen, dessen kühlkammerseitige Öffnung und dessen turbinenseitige Öffnung durch wenigstens ein freies Ende (60-1, 60-2, 60-3) der sickenartigen Umformungen (54-1, 54-2) gebildet ist.

8. Kühlluftzufuhrvorrichtung nach einem der vorhergehenden Ansprüche, **dadurch gekennzeichnet, dass** die bzw. eine die Kühlluftausströmöffnungen (52) aufweisende axiale Begrenzungswandung (40, 42) aus wenigstens zwei miteinander verbundenen Metallblechen gebildet ist, wobei jedes der Metallbleche eine Schicht bildet.

9. Kühlluftzufuhrvorrichtung nach einem der vorhergehenden Ansprüche, **dadurch gekennzeichnet, dass** die bzw. eine die Kühlluftausströmöffnungen (52) aufweisende axiale Begrenzungswandung (40, 42) aus wenigstens zwei miteinander verbundenen Schichten aus keramischen Faserverbundwerkstoffen gebildet ist, in denen entsprechende Umformungen zur Bildung der Ktühlluftausströmöffnungen (52) ausgebildet sind.

10. Gasturbine, insbesondere Fluggasturbine, umfassend eine Verdichtungsvorrichtung (16), eine Brennkammer (20) und eine Turbine (22, 24, 26), **dadurch gekennzeichnet, dass** sie im Bereich der Turbine (22, 24, 26) eine Kühlluftzufuhrvorrichtung (37) nach einem der vorhergehenden Ansprüche aufweist.

11. Gasturbine nach Anspruch 10, **dadurch gekennzeichnet, dass** die Turbine (22) eine Hochdruckturbine (24) und eine Niederdruckturbine (26) aufweist, wobei die Kühlluftzufuhrvorrichtung (37) Teil eines Turbinenzwischengehäuses (34) der Gasturbine ist.

12. Gasturbine nach Anspruch 11, **dadurch gekennzeichnet, dass** die bzw. eine die Kühlluftausströmöffnungen (52) aufweisende axiale Begrenzungswandung (40, 42) der Kühlluftzufuhrvorrichtung (37) zu der Hochdruckturbine (24) hin oder/und zu der Niederdruckturbine (26) hin angeordnet ist.

## Claims

1. A cooling air supply device for a gas turbine (10), in particular, an aircraft gas turbine, comprising:
a cooling air chamber (38) that may be arranged about a turbine shaft (28, 30) of the gas turbine (10),
at least one cooling air inlet opening, and a plurality of cooling air outlet orifices (52),
wherein the cooling air supply device has a first and a second axial bounding wall (40, 42), and a peripheral wall (44) joining the two axial bounding walls, together forming the cooling air chamber (38), wherein, at least one of the axial bounding walls (40,42) has provided therein a plurality of cooling air outlet orifices (52) that, when the cooling air chamber (38) is arranged in the gas turbine (10) are circumferentially distributed about the turbine shaft (28, 30) and adapted to allow the cooling air to substantially be discharged from the individual cooling air outlet orifices (52) in a direction of rotation of the gas turbine during operation with the gas turbine,
**characterized in that**, in the axial direction (AR), the or an axial bounding wall (40, 42) having the cooling air outlet orifices (52) has a layer-type structure, wherein the cooling air outlet orifices (52) are formed by deformation of at least one first cooling air chamber-side layer (40-1) and by deformation of at least one second layer (40-2) that is turbine-side during operation with the gas turbine.

2. The cooling air supply device according to claim 1, **characterized in that** the cooling air outlet orifices (52) are formed by deformation of the first and the second layer (40-1,40-2) in regions that lie opposite one another in the axial direction (AR), wherein the deformations (54-1, 54-2) are, in particular, configured so as to be complementary.

3. The cooling air supply device according to claim 2, **characterized in that** the deformations (54-1, 54-2) are configured so as to form cooling air channels (62) by placement of the at least one first layer (40-1) and the at least one second layer (40-2) against each other to establish a fluid communication between the cooling air chamber (38) and an ambient environment of the cooling air supply device.

4. The cooling air supply device according to any of claims 1 to 3, **characterized in that** the deformations (54-1, 54-2) are in a bead form, each exhibiting an angular or curved, in particular, arcuate geometry in the cross-section.

5. The cooling air supply device according to claim 4, **characterized in that** the bead-shaped deformations (54-1, 54-2) have a top chord (56-1, 56-2, 56-3) extending obliquely relative to the respective first or second layer (40-1, 40-2).

6. The cooling air supply device according to claim 4 or 5, **characterized in that** the bead-shaped deformations (54-1, 54-2) have an unattached end (60-1, 60-2, 60-3) separated from the relevant layer (40-1, 40-2).

7. The cooling air supply device according to claim 5 and 6, **characterized in that** bead-shaped deformations (54-1, 54-2) of the first and second layer, the first and second layers (40-1, 40-2) arranged opposite one another delimit an obliquely extending cooling air channel (62), of which a cooling chamber-side opening and turbine-side opening are formed by at least one unattached end (60-1, 60-2, 60-3) of the bead-shaped deformations (54-1, 54-2).

8. The cooling air supply device according to any of the preceding claims, **characterized in that** the or an axial bounding wall (40, 42) having the cooling air outlet orifices (52) is formed of at least two mutually joined metal sheets, each of the metal sheets forming a layer.

9. The cooling air supply device according to any of the preceding claims, **characterized in that** the or an axial bounding wall (40, 42) having the cooling air outlet orifices (52) is formed from at least two layers joined together and made of ceramic fiber composite materials in which corresponding deformations are configured to form the cooling air outlet orifices (52).

10. A gas turbine, in particular, an aircraft gas turbine, comprising a compressor device (16), a combustion chamber (20), and a turbine (22, 24, 26), **characterized by** comprising a cooling air supply device (37) according to any of the preceding claims in the region of the turbine (22, 24, 26).

11. The gas turbine according to claim 10, **characterized in that** the turbine (22) has a high-pressure turbine (24) and a low-pressure turbine (26), wherein the cooling air supply device (37) is part of an intermediate turbine housing (34) of the gas turbine.

12. The gas turbine according to claim 11, **characterized in that** the or an axial bounding wall (40, 42) of the cooling air supply device (37) having the cooling air outlet orifices (52) is arranged toward the high-pressure turbine (24) or toward the low-pressure turbine (26).

## Revendications

1. Dispositif d'alimentation en air de refroidissement pour une turbine à gaz (10), en particulier une turbine à gaz d'aéronef, comprenant :
une chambre d'air de refroidissement (38) qui peut être agencée autour d'un arbre de turbine (28, 30) de la turbine à gaz (10),
au moins une ouverture d'entrée d'air de refroidissement et plusieurs ouvertures de sortie d'air de refroidissement (52),
dans lequel le dispositif d'alimentation en air de refroidissement comprend une première et une seconde paroi de délimitation axiale (40, 42) et une paroi périphérique (44) reliant les deux parois de délimitation axiales, qui forment conjointement la chambre d'air de refroidissement (38),
dans lequel il est prévu dans au moins l'une des parois de délimitation axiales (40, 42) plusieurs ouvertures de sortie d'air de refroidissement (52) qui, lorsque la chambre d'air de refroidissement (38) est agencée dans la turbine gaz (10), sont réparties dans la direction périphérique autour de l'arbre de turbine (28, 30) et sont disposées de sorte que l'air de refroidissement sorte, en service avec la turbine à gaz, des ouvertures de sortie d'air de refroidissement individuelles (52) sensiblement dans le sens de rotation de la turbine à gaz,
**caractérisé en ce que** la ou une paroi de délimitation axiale (40, 42) présentant les ouvertures de sortie d'air de refroidissement (52) est élaborée en mode stratifié dans la direction axiale (AR), dans lequel les ouvertures de sortie d'air de refroidissement (52) sont formées par façonnage d'au moins une première couche côté chambre d'air de refroidissement (40-1) et par façonnage d'au moins une seconde couche (40-2) qui est située côté turbine en service avec la turbine à gaz.

2. Dispositif d'alimentation en air de refroidissement selon la revendication 1, **caractérisé en ce que** les ouvertures de sortie d'air de refroidissement (52) sont formées de sorte que la première et la seconde couche (40-1, 40-2) soient façonnées dans des zones qui sont opposées l'une de l'autre dans la direction axiale (AR), dans lequel les façonnages (54-1, 54-2) sont conçus en particulier de manière complémentaire.

3. Dispositif d'alimentation en air de refroidissement selon la revendication 2, **caractérisé en ce que** les façonnages (54-1, 54-2) sont conçus de sorte que, par agencement mutuel de l'au moins une première couche (40-1) et de l'au moins une seconde couche (40-2) soient formés des canaux d'écoulement d'air de refroidissement (62) qui établissent une communication fluidique entre la chambre d'air de refroidissement (38) et l'environnement externe du dispositif d'alimentation en air de refroidissement.

4. Dispositif d'alimentation en air de refroidissement selon l'une quelconque des revendications 1 à 3, **caractérisé en ce que** les façonnages (54-1, 54-2) sont conçus en forme de moulures, dans lequel ils présentent en section transversale une géométrie angulaire ou arquée, en particulier une géométrie de forme cintrée.

5. Dispositif d'alimentation en air de refroidissement selon la revendication 4, **caractérisé en ce que** les façonnages en forme de moulures (54-1, 54-2) présentent une membrure supérieure (56-1, 56-2, 56-3) qui est inclinée par rapport à la première et/ou la seconde couche respectives (40-1, 40-2).

6. Dispositif d'alimentation en air de refroidissement selon la revendication 4 ou 5, **caractérisé en ce que** les façonnages en forme de moulures (54-1, 54-2) présentent une extrémité libre (60-1, 60-2, 60-3) qui est séparée de la couche concernée (40-1, 40-2),

7. Dispositif d'alimentation en air de refroidissement selon les revendications 5 et 6, **caractérisé en ce que** les façonnages en forme de moulures (54-1, 54-2), agencés l'un à l'opposé de l'autre, de la première et de la deuxième couche (40-1, 40-2) délimitent un canal d'écoulement d'air de refroidissement (62) s'étendant en oblique, dont l'ouverture côté chambre de refroidissement et l'ouverture côté turbine sont formées par au moins une extrémité libre (60-1, 60-2, 60-3) des façonnages en forme de moulures (54-1, 54-2).

8. Dispositif d'alimentation en air de refroidissement selon l'une quelconque des revendications précédentes, **caractérisé en ce que** la ou une paroi de délimitation axiale (40, 42) présentant les ouvertures de sortie d'air de refroidissement (52) est formée d'au moins deux tôles métalliques reliées l'une à l'autre, dans lequel chacune des tôles mécaniques forme une couche.

9. Dispositif d'alimentation en air de refroidissement selon l'une quelconque des revendications précédentes, **caractérisé en ce que** la ou une paroi de délimitation axiale (40, 42) présentant les ouvertures de sortie d'air de refroidissement (52) sont formées d'au moins deux couches reliées l'une à l'autre en matériaux composites renforcés par des fibres céramiques, dans lesquelles des façonnages correspondants sont élaborés pour former les ouvertures de sortie d'air de refroidissement (52).

10. Turbine à gaz, en particulier turbine à gaz d'aéronef, comprenant un dispositif de compression (16), une chambre de combustion (20) et une turbine (22, 24, 26), **caractérisée en ce qu'**elle présente dans la zone de la turbine (22, 24, 26) un dispositif d'alimentation en air de refroidissement (37) selon l'une quelconque des revendications précédentes.

11. Turbine à gaz selon la revendication 10, **caractérisée en ce que** la turbine (22) présente une turbine haute pression (24) et une turbine basse pression (26), dans laquelle le dispositif d'alimentation en air de refroidissement (37) fait partie d'un boîtier intermédiaire (34) de la turbine à gaz.

12. Turbine à gaz selon la revendication 11, **caractérisée en ce que** la ou une paroi de délimitation axiale (40, 42), présentant les ouvertures de sortie d'air de refroidissement (52), du dispositif d'alimentation en air de refroidissement (37) est agencée vers la turbine haute pression (24) et/ou vers la turbine basse pression (26).
